# FASCICULE DE BREVET EUROPEEN

(11) **EP 3 071 859 B1**
(45) Date de publication et mention de la délivrance du brevet: **13.09.2017**
(21) Numéro de dépôt: 14799688.8
(22) Date de dépôt: 05.11.2014
(51) Int. Cl.: F16D 55/2265, F16D 55/227, F16D 65/00

(54) **FREIN À DISQUE DE VÉHICULE AUTOMOBILE À JEU TRANSVERSAL RÉDUIT ENTRE COLONNETTES ET ALÉSAGES**
KFZ-SCHWIMMSATTELBREMSE MIT VERRINGERTEM LUFTSPOEL ZWISCHEN GLEITSTIFTE UND BOHRUNGEN
MOTOR VEHICLE DISC BRAKE HAVING REDUCED TRANSVERSE CLEARANCE BETWEEN PINS AND BORES

(30) Priorité: 18.11.2013 FR 1361276
(43) Date de publication de la demande: 28.09.2016
(73) Titulaire: Chassis Brakes International B.V., 5656 AG Eindhoven (NL)
(72) Inventeur: GAYE, André, Dalian 116600 (CN); MERRIEN, Sandra, F-75020 Paris (FR)
(74) Mandataire: Brevalex
(86) Numéro de dépôt international: PCT/EP2014/073770
(87) Numéro de publication internationale: WO 2015/071142

(56) Documents cités:
- CN-A- 103 062 262
- CN-U- 202 349 032
- CN-U- 203 082 090
- DE-U1-202006 006 142
- GB-A- 1 271 609

## Description

### DOMAINE TECHNIQUE DE L'INVENTION

L'invention se rapporte à un frein à disque de véhicule automobile.

### ARRIERE PLAN TECHNIQUE DE L'INVENTION

L'invention se rapporte plus particulièrement à un frein à disque de véhicule automobile comportant :
- une chape qui comporte deux alésages étagés d'axes parallèles, dont chacun comporte au moins un premier tronçon ;
- un étrier qui est monté coulissant axialement par rapport à la chape ;
- deux colonnettes d'axes parallèles dont chacune comporte une extrémité axiale de fixation qui est fixée à l'étrier et au moins un tronçon de guidage en coulissement axial de l'étrier par rapport à la chape qui est monté coulissant, avec un jeu radial, dans le premier tronçon de l'alésage étagé associé de la chape.

Cette conception, particulièrement répandue, présente des inconvénients.

Dans un frein à disque conventionnel, pour permettre le coulissement des colonnettes dans les premiers tronçons des alésages, un jeu fonctionnel radial existe entre lesdites colonnettes et les lesdits premiers tronçons associés. Ce jeu n'est pas orienté géométriquement dans l'espace, notamment par rapport au plan passant par les axes des deux colonnettes.

Lors d'un freinage, des garnitures de friction appliquées sur un disque en rotation sont entraînées par le disque et entraînent à leur tour l'étrier portant les colonnettes. Il en résulte un choc entre lesdites colonnettes et leurs alésages associés de réception et de guidage en coulissement qui sont ménagés dans la chape. Le jeu non maîtrisé entre ces alésages de la chape et les colonnettes provoque un bruit de freinage lors de l'établissement de l'appui tangentiel des colonnettes dans leurs alésages respectifs. DE 20 2006 006 142 U1 décrit un tronçon de guidage avec trois portions axiales uniformement distribués, CN 203082090 U et CN 103062262 A décrivent chacun deux tronçons de guidage avec une pluralité de rainures axiales et radiales uniformement distribuées, sans décrire un positionnement de ces rainures par rapport au plan passant par les deux tronçons de guidage.

### BREF RESUME DE L'INVENTION

Afin de remédier à cet inconvénient, l'invention propose un frein à disque de véhicule automobile qui comporte des moyens permettant de limiter les bruits précités.

Dans ce but, l'invention propose un frein à disque du type décrit précédemment, caractérisé en ce que la surface externe cylindrique de guidage dudit tronçon de guidage en coulissement de chaque colonnette comporte au moins deux portions axiales opposées, dont chacune s'étend angulairement autour de l'axe de chaque colonnette selon un angle inférieur à 90°, et en ce qu'un plan axial médian de ces deux portions est parallèle à un plan passant par les axes des deux colonnettes.

Selon d'autres caractéristiques de l'invention :
- les deux portions sont diamétralement opposées,
- le jeu radial, dans ledit plan passant par les axes des deux colonnettes, de chaque tronçon de guidage dans le premier tronçon de l'alésage étagé associé est égal à une valeur moyenne commune ;
- chaque tronçon de guidage de chaque colonnette comporte au moins deux autres portions axiales opposées de la surface externe cylindrique dudit tronçon ;
- chaque dite portion est délimitée par une paire de méplats d'orientation axiale ;
- chaque portion axiale s'étend sur une même longueur axiale ;
- chaque tronçon de guidage s'étend à partir d'une extrémité libre de la colonnette associée ;
- au moins un méplat de chaque colonnette s'étend à partir de l'extrémité libre de la colonnette suivant une longueur supérieure à celle du tronçon de guidage ;
- les deux colonnettes sont identiques.
- chaque alésage étagé associé de la chape comporte, du côté de l'extrémité de fixation de la colonnette à l'étrier, un second tronçon d'entrée, et chaque colonnette reçoit un capuchon tubulaire d'étanchéité dont un tronçon est interposé radialement entre la colonnette associée et ledit second tronçon d'entrée,

### BREF RESUME DES FIGURES

D'autres caractéristiques et avantages de l'invention apparaîtront à la lecture de la description détaillée qui suit pour la compréhension de laquelle on se reportera aux dessins annexés dans lesquels :
- la figure 1 une vue de dessus, avec arrachements partiels, d'un étrier et d'une chape d'un frein à disque selon l'état de la technique, illustrant notamment les possibilités de mouvement transversal de chaque colonnette de l'étrier dans l'alésage étagé associé de la chape d'un frein à disque ;
- la figure 2 est une vue représentant en détail les deux colonnettes et les capuchons d'étanchéité associés du frein à disque de la figure 1 selon l'état de la technique ;
- la figure 3 est une vue de côté, avec arrachement partiel, représentant un étrier et une chape d'un frein à disque selon l'état de la technique ;
- la figure 4 est une vue de détail illustrant l'alésage axial interne d'un capuchon d'étanchéité d'un frein à disque selon l'état de la technique ;
- la figure 5 est une vue dessus, analogue à celle de la figure 1, représentant un étrier et une chape d'un frein à disque selon l'invention ;
- la figure 6 est une vue de côté et en perspective représentant à plus grande échelle les deux colonnettes et les deux capuchons d'étanchéité du frein à disque selon l'invention de la figure 5 ;
- la figure 7 est une vue analogue à celle de la figure 3 représentant un étrier et une chape pour le frein à disque selon l'invention ;
- la figure 8 est une vue en perspective, avec arrachement partiel, illustrant la paroi de l'alésage axial interne d'un capuchon pour le frein à disque selon l'invention ;
- la figure 9 est une vue en coupe par un plan transversal d'un premier tronçon d'une colonnette reçue dans un premier tronçon de l'alésage étagé d'une chape du frein à disque selon l'invention.

### DESCRIPTION DETAILLEE DES FIGURES

Dans la description et les revendications qui suivent, on utilisera à titre non limitatif les expressions telles que « orientation longitudinale », « transversale », etc. en référence au dièdre (L, T) représenté aux figures et aux définitions données dans la description.

Dans la description qui va suivre, des chiffres de référence identiques désignent des pièces identiques ou analogues ou ayant des fonctions similaires.

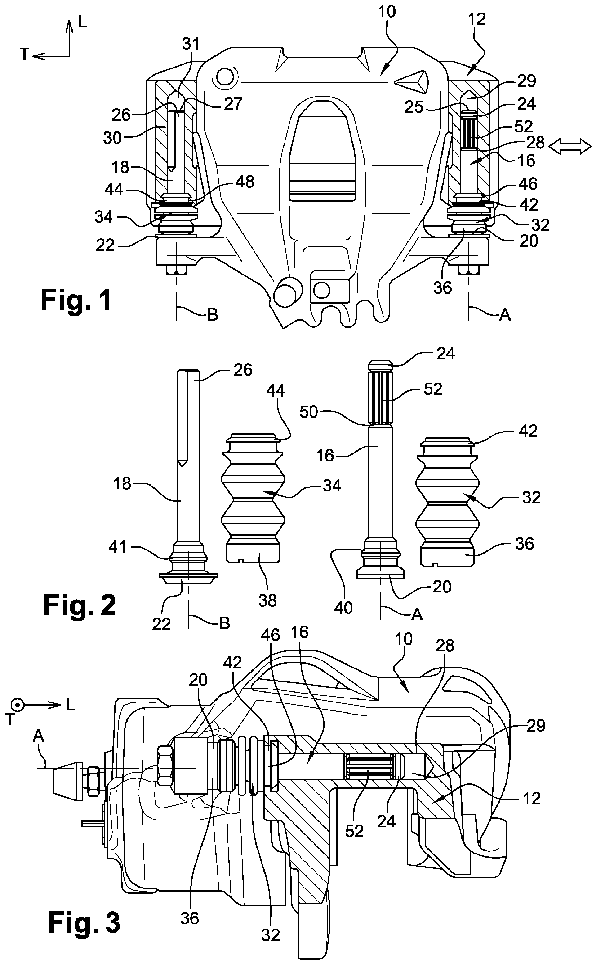

On a représenté aux figures 1 et 3 un étrier 10 et une chape 12 d'un frein à disque (non représenté) de véhicule automobile réalisé conformément à l'état de la technique.

De manière connue, le frein à disque comporte une chape fixe 12 qui comporte deux alésages étagés 29, 31 d'axes parallèles A, B, dont chacun comporte au moins un premier tronçon 28, 30.

Le frein comporte aussi un étrier 10 qui est monté mobile en coulissement axialement, selon une direction parallèles aux axes A et B, par rapport à la chape fixe 12.

L'étrier 10 est monté coulissant par rapport à la chape 12 par l'intermédiaire de deux colonnettes parallèles 16, 18 d'axes A, B dont chacune comporte une première extrémité axiale 20, 22 qui est fixée à l'étrier 10, et comporte au moins un tronçon 24, 26 de guidage en coulissement axial de l'étrier 10 par rapport à la chape 12 qui est monté coulissant, avec un jeu radial, dans le premier tronçon 28, 30 de l'alésage étagé 29, 31 associé de la chape 12.

Lors du freinage l'étrier serre le disque via les patins de frein et les pistons hydrauliques qui agissent sur les patins. L'ensemble « suit » la direction de rotation du disque dans un axe parallèle au plan A-B jusqu'à établissement du contact colonnettes/alésages.

Comme l'illustrent les figures 1 et 3, une solution connue de l'état de la technique pour limiter ces battements consiste d'une part à insérer radialement un capuchon 32, 34 en matériau élastomère, qui est reçu sur chaque colonnette 16, 18, entre la colonnette 16, 18 et un second tronçon 46, 48 dit "d'entrée" de l'alésage étagé 29, 31 qui est tourné vers l'étrier 10.

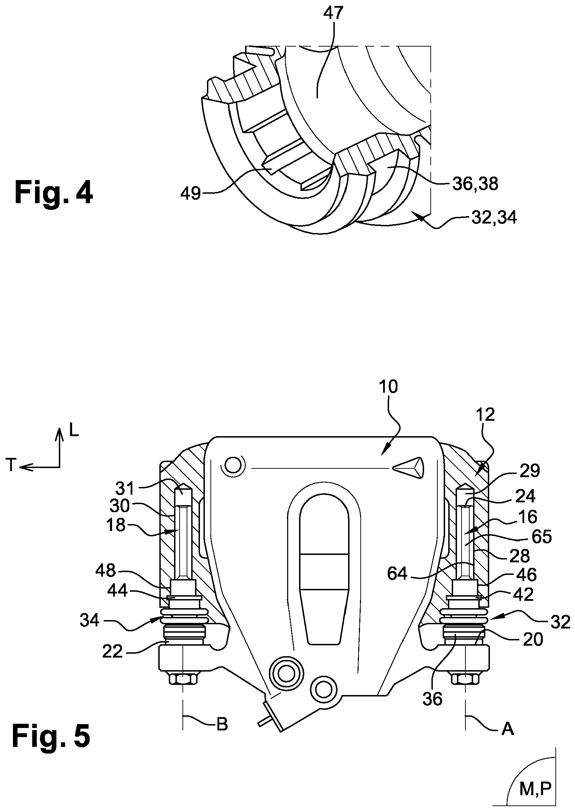

Comme l'illustre la figure 4, chaque capuchon 32, 34 peut aussi assurer l'étanchéité des alésages étagés 29, 31 aux poussières. Pour permettre la "décompression" ou évacuation de l'air contenu dans les alésages étagés 29, 31, chaque capuchon 32, 34 comporte des stries ou rainures axiales 49 formées dans la paroi d'un alésage interne 47 du capuchon. Les stries 49 permettent d'évacuer l'air qui est comprimé dans le fond axial borgne de l'alésage étagé correspondant 29, 31 du fait de l'avancée axiale des colonnettes 16, 18 dans les alésages 29, 31 associés lorsque l'étrier 10 se déplace par rapport à la chape 12, au fur et à mesure de l'usure des garnitures de freinage et lors d'un actionnement de freinage.

D'autre part, comme l'illustrent les figures 1 et 2, le frein présente une conception et un montage non symétrique dans lequel une des colonnettes, par exemple ici la colonnette 16, reçoit sur une partie intermédiaire 50 de son premier tronçon 24 de guidage, un manchon 52 en matériau élastomère ou "bushing", qui, en position assemblée de l'étrier et de la chape, est logé dans le premier tronçon 28 de l'alésage étagé 29.

Il importe donc de proposer un frein à disque des moyens plus efficaces de limitation du déplacement transversal des colonnettes 16, 18 afin de limiter les bruits parasites.

Le frein à disque selon l'invention a pour but de réduire ce jeu suivant la direction transversale T

Conformément à l'invention, la surface externe cylindrique de guidage du tronçon 24, 26 de guidage de chaque colonnette 16, 18 n'est plus une surface cylindrique convexe continue s'étendant angulairement sur toute la circonférence. La surface externe cylindrique de guidage du tronçon 24, 26 de guidage de chaque colonnette 16, 18 comporte au moins deux portions axiales 64 opposées, dont chacune s'étend angulairement autour de l'axe A, B de chaque colonnette 16, 18 selon un angle "α" inférieur à quatre vingt dix degrés d'angle, et un plan axial "M" médian de ces deux portions 64 est parallèle à un plan "P" passant par les axes A, B des deux colonnettes 16, 18.

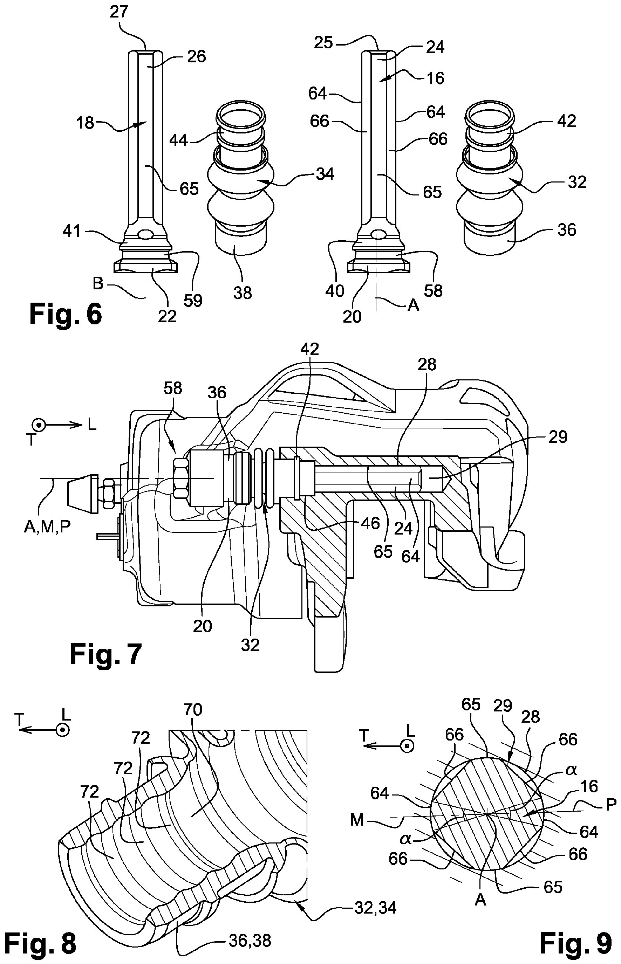

Cette configuration et cet agencement géométrique sont représentés en section pour la colonnette 16 et l'alésage étagé 29 à la figure 9.

Dans un mode de réalisation préféré de l'invention, les portions axiales 64 sont diamétralement opposées. Dans ce cas, le plan M est confondu avec le plan P passant par les axes A, B des deux colonnettes 16, 18.

Cette configuration n'est toutefois pas limitative de l'invention, et le plan M peut, en variante, être décalé par rapport au plan "P" tout en y étant parallèle, les portions axiales 64 étant alors également décalées.

Une autre caractéristique de l'invention est que le jeu radial, dans ledit plan M parallèle au plan P est égal à une valeur moyenne commune.

Dans le cas qui a est représenté à la figure 9, le jeu radial, le plan P passant par les axes A, B est donc aussi égal à une valeur moyenne commune.

Par exemple, pour un frein de véhicule automobile de taille moyenne comportant des colonnettes dont le diamètre est de préférence compris entre 8 et 14 mm, avantageusement égal à 10 mm, la valeur moyenne commune du jeu radial est égale à environ 195 µm.

Cette configuration permet ainsi avantageusement de répartir de manière égale les jeux dans les deux alésages 29, 31.

Pour garantir l'orientation dans l'espace des portions axiales 64, le frein comporte un moyen d'indexation 58, 59 de la position angulaire de chaque colonnette 16, 18 autour de son axe A, B par rapport à l'étrier 10 auquel elle est fixée.

A cet effet, comme représenté de manière non limitative de l'invention aux figures 5 et 7, l'extrémité 20, 22 de fixation de chaque colonnette 16, 18 à l'étrier 10 est reçue dans un trou axial (non représenté) de réception formé dans l'étrier 10 et ladite extrémité 20, 22 de la colonnette considérée 16, 18 comporte au moins un tronçon 58, 59 de fixation de la colonnette qui est conformé en une empreinte non cylindrique circulaire complémentaire d'une empreinte formée dans ledit trou axial de réception.

Par exemple, chaque tronçon 58, 59 non cylindrique peut comporter une empreinte obtenue à partir d'une section cylindrique circulaire sur laquelle sont pratiqués deux méplats et le trou complémentaire (non représenté) de l'étrier 10 comporte à cet effet deux méplats complémentaires.

Cette configuration permet de former le moyen d'indexation de la position angulaire de chaque colonnette 16, 18 et d'interdire sa rotation autour de son axe A, B, et ainsi de garantir l'orientation souhaitée des portions axiales 64 par rapport à l'étrier, et ultérieurement par rapport à la chape en position assemblée de l'étrier sur la chape.

De la sorte, les possibilités de battement de chaque colonnette 16, 18 suivant la direction transversale T dans le premier tronçon 28, 30 de l'alésage étagé associé 29, 31 sont réduites.

Dans un mode de réalisation préféré de l'invention, chaque tronçon 24, 26 de guidage de chaque colonnette 16, 18 comporte deux autres portions axiales 65 opposées de la surface externe cylindrique de guidage du tronçon 24, 26.

Ces deux autres portions axiales 65 opposées de la surface externe cylindrique dudit tronçon 24, 26 s'étendent aussi selon un angle inférieur à quatre vingt dix degré d'angle, et un plan axial médian de ces deux autres portions 65 est coupe le plan M.

Selon le mode de réalisation qui a été représenté à titre non limitatif à la figure 9, les deux autres portions 65 sont diamétralement opposées et un plan axial médian (non représenté) de ces deux autres portions 65 est orthogonal au plan P passant par les axes A, "B" des deux colonnettes 16, 18.

A titre de variante non représentée, chaque tronçon de guidage 24, 26 pourrait comporter d'autres portions de guidage. Chaque tronçon de guidage 24, 26 pourrait ainsi comporter plus de quatre portions de guidage 64, 65.

Pour réaliser les portions 64, 65, chaque portion 64, 65 est par exemple délimitée par une paire de méplats opposés 66 d'orientation axiale.

Chaque tronçon 24, 26 de chaque colonnette 16, 18 est ainsi obtenu ici à partir d'un tronçon de section cylindrique dans lequel sont pratiqués deux paires de méplats 66 parallèles et diamétralement opposés c'est à dire quatre méplats 66 deux à deux opposés et non alignés suivant les directions transversales L et T, comme représenté aux figures 6 et 9.

Dans le mode de réalisation préféré de l'invention, chaque portion axiale 64, 65 s'étend sur une même longueur axiale.

Chaque tronçon 24, 26 de guidage s'étend à partir d'une extrémité libre 25, 27 de la colonnette associée 16, 18.

Ainsi, chaque tronçon de guidage offre une longueur maximale pour le guidage axial de l'étrier.

Pour permettre la "décompression" de l'air contenu dans les alésages étagés 29 et 30, au moins un méplat 66 de chaque colonnette 16, 18 s'étend à partir de l'extrémité libre 25, 27 de la colonnette suivant une longueur supérieure à celle du tronçon 24, 26 de guidage.

Chaque alésage étagé 29, 31 associé de la chape 12 comporte, du côté de l'extrémité 20, 22 de fixation de la colonnette 16, 18 à l'étrier 10, un second tronçon 46, 48 dit "d'entrée", et chaque colonnette 16, 18 reçoit un capuchon 32, 34 tubulaire dont un tronçon axial est interposé radialement entre la colonnette associée 16, 18 et le second tronçon 46, 48 d'entrée.

Les capuchons 32, 34 assurent l'étanchéité des alésages étagés 29, 31 aux poussières.

Chaque capuchon 32, 34 comporte une extrémité 36, 38 qui est emboîtée sur une collerette 40, 41 de l'extrémité 20, 22 de fixation de chaque colonnette 16, 18 et comporte un tronçon opposé 42, 44 qui est interposé radialement entre chaque colonnette 16, 18 et le second tronçon d'entrée 46, 48 de l'alésage étagé 29, 31 associé de la chape 12.

Pour permettre la décompression de l'air contenu dans les alésages étagés 29 et 30, les capuchons 32, 34 sont associés aux méplats 66 précédemment évoqués en proposant un passage de l'air vers l'extérieur.

A cet effet, une paroi de l'alésage interne 70 de chaque capuchon tubulaire 32, 34 comporte au moins une gorge 72 radiale interne.

Dans cette configuration, la gorge radiale interne 72 "croise" des canaux axiaux délimités par les méplats 66 et les parois des alésages 29, 31 et elle permet, de ce fait, la circulation de l'air contenu dans l'alésage 29, 31 vers le milieu extérieur.

Selon un premier mode de réalisation des capuchons 32, 34, qui est représenté à la figure 8, la paroi interne 70 de chaque capuchon 32, 34 tubulaire comporte une pluralité de gorges annulaires 72 qui sont régulièrement espacées suivant toute la longueur axiale du capuchon 32.

Contrairement aux conceptions précédentes, la conception selon l'invention permet avantageusement, d'utiliser deux colonnettes 16, 18 identiques, ce qui permet de réduire les coûts de fabrication d'un tel frein.

L'invention n'est pas limitée à la conception de principe qui vient d'être décrite. Selon une "inversion mécanique" classique dans le domaine, les colonnettes peuvent être fixées à l'étrier et les alésages associés peuvent être formés dans la chape.

De plus, que les colonnettes soient fixées à l'étrier ou bien à la chape, selon une autre "inversion mécanique", les portées cylindriques de guidage en coulissement axial des colonnettes peuvent être cylindriques circulaires sur toute la périphérie angulaire et ce sont alors les surfaces concaves de guidage appartenant aux alésages associés qui présentent une conception selon l'invention constituée par au moins une paire de portions opposées orientées et situées dans le plan P.

## Revendications

1. Frein à disque de véhicule automobile comportant :
- une chape (12) qui comporte deux alésages étagés d'axes parallèles, dont chacun comporte au moins un premier tronçon (28, 30) ;
- un étrier (10) qui est monté coulissant axialement par rapport à la chape (12) ;
- deux colonnettes (16, 18) d'axes (A,B) parallèles dont chacune comporte une extrémité axiale (20, 22) de fixation fixée à l'étrier (10) et au moins un tronçon (24, 26) de guidage en coulissement axial de l'étrier (10) par rapport à la chape (12) qui est monté coulissant, avec un jeu radial, dans le premier tronçon (28, 30) de l'alésage étagé (29, 31) associé de la chape (12), **caractérisé en ce qu'**une surface externe cylindrique de guidage dudit tronçon (24, 26) de guidage en coulissement de chaque colonnette (16, 18) comporte au moins deux portions axiales (64) opposées, dont chacune s'étend angulairement autour de l'axe (A, B) de chaque colonnette (16, 18) selon un angle inférieur à 90°, et **en ce qu'**un plan axial médian (M) de ces deux portions (64) est parallèle à un plan (P) passant par les axes (A, B) des deux colonnettes (16, 18).

2. Frein à disque selon la revendication précédente, **caractérisé en ce que** les deux portions (64) sont diamétralement opposées.

3. Frein à disque selon la revendication 1, **caractérisé en ce que** le jeu radial, dans ledit plan (M) parallèle au plan (P) passant par les axes (A, B) des deux colonnettes (16, 18), de chaque dit tronçon (24, 26) de guidage dans le premier tronçon (28, 30) de l'alésage étagé (29, 31) associé est égal à une valeur moyenne commune.

4. Frein à disque selon la revendication 3, **caractérisé en ce que** chaque tronçon (24, 26) de guidage de chaque colonnette (16, 18) comporte au moins deux autres portions axiales (65) opposées de la surface externe cylindrique dudit tronçon (24, 26).

5. Frein à disque selon l'une des revendications 1 à 4, **caractérisé en ce que** chaque dite portion (64, 65) est délimitée par une paire de méplats (66) d'orientation axiale.

6. Frein à disque selon l'une des revendications 1 à 4, **caractérisé en ce que** chaque portion axiale (64, 65) s'étend sur une même longueur axiale.

7. Frein à disque selon l'une des revendications 1 à 6, **caractérisé en ce que** chaque tronçon (24, 26) de guidage s'étend à partir d'une extrémité libre (25, 27) de la colonnette (16, 18) associée (16, 18).

8. Frein à disque selon la revendication 3, **caractérisé en ce qu'**au moins un méplat (66) de chaque colonnette s'étend à partir de l'extrémité libre (25, 27) de la colonnette suivant une longueur supérieure à celle du tronçon (24, 26) de guidage.

9. Frein à disque selon l'une des revendications précédentes, **caractérisé en ce que** les deux colonnettes (16, 18) sont identiques

10. Frein à disque selon l'une quelconque des revendications précédentes, **caractérisé en ce que** chaque alésage étagé (29, 31) associé de la chape (12) comporte, du côté de l'extrémité (20, 22) de fixation de la colonnette (16, 18) à l'étrier un second tronçon (46, 48) d'entrée, **en ce que** chaque colonnette (16, 18) reçoit un capuchon (32, 34) tubulaire d'étanchéité dont un tronçon (42, 44) est interposé radialement entre la colonnette (16, 18) associée et ledit second tronçon (46, 48) d'entrée.

## Patentansprüche

1. Scheibenbremse für Kraftfahrzeuge, enthaltend:
- einen Bremsträger (12), der zwei gestufte Bohrungen mit parallelen Achsen aufweist, von denen jede zumindest einen ersten Abschnitt (28, 30) aufweist;
- einen Bremssattel (10), der bezüglich des Bremsträgers (12) axial gleitbeweglich gelagert ist;
- zwei Stützen (16, 18) mit parallelen Achsen (A, B), von denen jede ein axiales Befestigungsende (20, 22), das am Bremssattel (10) befestigt ist, und zumindest einen Führungsabschnitt (24, 26) zur axialen Gleitführung des Bremssattels (10) bezüglich des Bremsträgers (12) aufweist, der in dem ersten Abschnitt (28, 30) der zugeordneten, gestuften Bohrung (29, 31) des Bremsträgers (12) mit radialem Spiel gleitbeweglich gelagert ist,
**dadurch gekennzeichnet, dass** eine zylindrische Führungsaußenfläche zum Führen des Gleitführungsabschnitts (24, 26) jeder Stütze (16, 18) zumindest zwei entgegengesetzte, axiale Teilstücke (64) aufweist, von denen sich jedes winkelig um die Achse (A, B) einer jeden Stütze (16, 18) mit einem Winkel von unter 90° erstreckt, und dass eine axiale Mittelebene (M) dieser beiden Teilstücke (64) parallel zu einer Ebene (P) verläuft, die durch die Achsen (A, B) der beiden Stützen (16, 18) geht.

2. Scheibenbremse nach dem vorangehenden Anspruch, **dadurch gekennzeichnet, dass** die beiden Teilstücke (64) diametral entgegengesetzt sind.

3. Scheibenbrems nach Anspruch 1, **dadurch gekennzeichnet, dass** das radiale Spiel eines jeden Führungsabschnitts (24, 26) in dem ersten Abschnitt (28, 30) der zugeordneten gestuften Bohrung (29, 31) in der Ebene (M) parallel zur Ebene (P), die durch die Achsen (A, B) der beiden Stützen (16, 18) geht, gleich einem gemeinsamen Mittelwert ist.

4. Scheibenbremse nach Anspruch 3, **dadurch gekennzeichnet, dass** jeder Führungsabschnitt (24, 26) jeder Stütze (16, 18) zumindest zwei weitere entgegengesetzte, axiale Teilstücke (65) der zylindrischen Außenfläche des Abschnitts (24, 26) aufweist.

5. Scheibenbremse nach einem der Ansprüche 1 bis 4, **dadurch gekennzeichnet, dass** jedes Teilstück (64, 65) von einem Paar von Abflachungen (66) mit axialer Ausrichtung begrenzt wird.

6. Scheibenbremse nach einem der Ansprüche 1 bis 4, **dadurch gekennzeichnet, dass** jedes axiale Teilstück (64, 65) sich über eine gleiche axiale Länge erstreckt.

7. Scheibenbremse nach einem der Ansprüche 1 bis 6, **dadurch gekennzeichnet, dass** jeder Führungsabschnitt (24, 26) sich ausgehend von einem freien Ende (25, 27) der zugeordneten Stütze (16, 18) erstreckt.

8. Scheibenbremse nach Anspruch 3, **dadurch gekennzeichnet, dass** zumindest eine Abflachung (66) jeder Stütze sich ausgehend von dem freien Ende (25, 27) der Stütze entlang einer Länge erstreckt, die größer als die des Führungsabschnitts (24, 26) ist.

9. Scheibenbremse nach einem der vorangehenden Ansprüche, **dadurch gekennzeichnet, dass** die beiden Stützen (16, 18) identisch sind.

10. Scheibenbremse nach einem der vorangehenden Ansprüche, **dadurch gekennzeichnet, dass** jede zugeordnete, gestufte Bohrung (29, 31) des Bremsträgers (12) auf der Seite des Befestigungsendes (20, 22) der Stütze (16, 18) am Bremssattel einen zweiten Einlassabschnitt (46, 48) aufweist, dass jede Stütze (16, 18) eine rohrförmige Dichtkappe (32, 34) aufnimmt, von der ein Abschnitt (42, 44) radial zwischen der zugeordneten Stütze (16, 18) und dem zweiten Einlassabschnitt (46, 48) eingefügt ist.

## Claims

1. Motor vehicle disc brake having:
- a carrier (12) which has two stepped bores with parallel axes, each one of which has at least one first section (28, 30);
- a calliper (10) which is mounted so as to slide axially with respect to the carrier (12);
- two pins (16, 18) with parallel axes (A, B), each of which has an axial attachment end (20, 22) attached to the calliper (10) and at least one guide section (24, 26) for guiding the axial sliding of the calliper (10) with respect to the carrier (12), which is mounted so as to slide, with radial clearance, in the first section (28, 30) of the associated stepped bore (29, 31) of the carrier (12), **characterised in that** an external cylindrical guide surface of said section (24, 26) for guiding the sliding of each pin (16, 18) has at least two opposing axial portions (64), each of which extends angularly about the axis (A, B) of each pin (16, 18) at an angle of less than 90°, and **in that** an axial midplane (M) of these two portions (64) is parallel to a plane (P) passing through the axes (A, B) of the two pins (16, 18).

2. Disc brake according to the previous claim, **characterised in that** the two portions (64) are diametrically opposed.

3. Disc brake according to claim 1, **characterised in that** the radial clearance, in said plane (M) parallel to the plane (P) passing through the axes (A, B) of the two pins (16, 18), of each said guide section (24, 26) in the first section (28, 30) of the associated stepped bore (29, 31) is equal to a common mean value.

4. Disc brake according to claim 3, **characterised in that** each guide section (24, 26) of each pin (16, 18) has at least two other opposing axial portions (65) of the external cylindrical surface of said section (24, 26).

5. Disc brake according to one of claims 1 to 4, **characterised in that** each said portion (64, 65) is defined by a pair of axially-oriented flat sections (66).

6. Disc brake according to one of claims 1 to 4, **characterised in that** each axial portion (64, 65) extends along the same axial length.

7. Disc brake according to one of claims 1 to 6, **characterised in that** each guide section (24, 26) extends from a free end (25, 27) of the associated pin (16, 18).

8. Disc brake according to claim 3, **characterised in that** at least one flat section (66) of each pin extends from the free end (25, 27) of the pin along a length that is greater than that of the guide section (24, 26).

9. Disc brake according to one of the previous claims, **characterised in that** the two pins (16, 18) are identical.

10. Disc brake according to any of the previous claims, **characterised in that** each associated stepped bore (29, 31) of the carrier (12) has, on the side nearest the end (20, 22) for securing the pin (16, 18) to the calliper, a second inlet section (46, 48), and **in that** each pin (16, 18) receives a tubular sealing cap (32, 34), one section (42, 44) of which is radially inserted between the associated pin (16, 18) and said second inlet section (46, 48).
